# EUROPEAN PATENT APPLICATION

(11) **EP 4 467 851 A1**
(43) Date of publication of application: **27.11.2024**
(21) Application number: 22922039.7
(22) Date of filing: 02.11.2022
(51) Int. Cl.: F16K 5/06, F16K 11/08

(54) **FLOW PATH SWITCH VALVE**

(30) Priority: 20.01.2022 JP 2022007407
(71) Applicant: Fujikoki Corporation, Tokyo 158-0082 (JP)
(72) Inventor: KONDO, Daisuke, Tokyo 158-0082 (JP); HARA, Seiichi, Tokyo 158-0082 (JP); MOCHIZUKI, Kenichi, Tokyo 158-0082 (JP); MORITA, Kento, Tokyo 158-0082 (JP)
(74) Representative: Ter Meer Steinmeister & Partner
(86) International application number: PCT/JP2022/041081
(87) International publication number: WO 2023/139888

(57) **Abstract**

Three flow path ports are each formed on side walls of a valve main body. The sealing portion disposed so as to surround the flow path port seals between the outer surface of the valve body and a side wall. The outer surface of the rotating valve body is in contact with an entire circumference of at least one sealing portion.

## Description

### Technical Field

The present disclosure relates to a flow path switching valve.

### Background Art

In a ball valve body of a flow path switching valve described in Japanese Patent Application Laid-Open (JP-A) No. 2020-16330, a size in an axial direction is smaller than a size in a direction orthogonal to an axis so that a sealing member is in a restored state in an assembly posture and the sealing member is in a compressed state in a support posture. When the flow path switching valve is assembled, the pair of facing seat members and a sealing member corresponding to each of the seat members are accommodated in a valve chamber, and a ball valve body is disposed in an assembly posture between the pair of seat members. A rod-shaped jig is inserted from a second flow path of a valve main body, and a distal end portion of the rod-shaped jig is fitted into a recessed portion of a jig attachment portion of the ball valve body. The ball valve body is rotated from the assembly posture to the support posture by rotating the rod-like jig.

### SUMMARY OF INVENTION

### Technical Problem

A flow path switching valve includes a valve main body in which three flow path ports are formed in a side wall, a spherical valve body disposed in a valve chamber formed inside the valve main body, and a sealing portion that seals between an outer surface of the valve body and a side wall of the valve main body. A cavity selectively connected to the flow path port is formed in the spherical valve body.

In a conventional flow path switching valve, by rotating a valve body, a specific flow path port and another one flow path port are connected, or a specific flow path port and another two flow path ports are connected. However, it was not possible to close each of the flow path ports.

An object of the disclosure is to provide a flow path switching valve having a valve main body in which at least three flow path ports are formed, in which each of the three flow path ports can be closed by rotating a valve body.

### Solution to Problem

According to a first aspect of the disclosure, there is provided a flow path switching valve including: a valve main body, a valve chamber being formed inside the valve main body and a flow path port through which a fluid passes being formed in each of three side walls constituting the valve chamber; a valve body that is rotatably disposed in the valve chamber, that has a cavity formed inside the valve body, that has a spherical outer surface, and that has a flow hole through which a fluid flowing into the cavity or flowing out from the cavity passes and which is formed in the outer surface; and three sealing portions that each have an annular shape, that are each disposed so as to surround the flow path port, and that each come into contact with the outer surface to seal between the outer surface and a side wall, in which the outer surface of the rotating valve body is in contact with an entire circumference of at least one of the sealing portions.

According to the above aspect, the three flow path ports are formed in the side wall. The sealing portion disposed so as to surround the flow path port seals between the outer surface of the valve body and a side wall.

Here, the outer surface of the rotating valve body is in contact with an entire circumference of at least one sealing portion. In other words, the outer surface of the rotating valve body closes at least one flow path port. As described above, in the flow path switching valve having the valve main body in which at least three flow path ports are formed, each of the three flow path ports can be closed by rotating the valve body.

In the flow path switching valve according to a second aspect of the disclosure, in the flow path switching valve according to the first aspect, the valve body rotates to an angular position at which the outer surface is in contact with an entire circumference of any one of the sealing portions and an angular position at which the outer surface is in contact with an entire circumference of any two of the sealing portions.

According to the above aspect, the valve body rotates to the angular position at which the outer surface is in contact with an entire circumference of any one sealing portion and the angular position at which the outer surface is in contact with an entire circumference of any two sealing portions. In other words, the valve body rotates to an angular position at which the outer surface closes any one of the flow path ports and an angular position at which the outer surface closes any two of the flow path ports. By rotating the valve body in this manner, any one of the flow path ports or any two of the flow path ports can be closed.

In the flow path switching valve according to a third aspect of the disclosure, in the flow path switching valve according to the first or second aspect, the sealing portion includes an annular seat and an O-ring in contact with the seat and a side wall, an annular tapered surface that is in contact with the outer surface of the valve body is formed on the seat, and at least a part of the outer surface of the valve body comes into contact with each tapered surface of three seats and the outer surface presses the seat toward the side wall side to elastically deform the O-ring, even in a case in which the rotating valve body is disposed at any angular position.

According to the above aspect, at least a part of the outer surface of the valve body is in contact with each tapered surface of the three seats even in a case in which the rotating valve body is disposed at any angular position. The outer surface of the valve body presses the seat toward the side wall side to elastically deform the O-ring.

As described above, the O-ring is elastically deformed, so that the contact pressure between the outer surface of the valve body and the tapered surface of the seat is increased. That is, the valve body is pushed by the seat from three directions. As a result, the posture of the rotating valve body is always stable.

In the flow path switching valve according to a fourth aspect of the disclosure, in the flow path switching valve according to any one of the first to third aspects, the flow path port has a circular shape, and sandwiching angles of center lines of adjacent flow path ports are all the same.

According to the above aspect, the sandwiching angles of the center lines of adjacent flow path ports are all the same. As a result, the flow path switching valve can be easily configured as compared with a case where the sandwiching angles are different.

In the flow path switching valve according to a fifth aspect of the disclosure, in the flow path switching valve according to any one of the first to fourth aspects, an inflow port through which a fluid flowing into the valve chamber passes is formed at a bottom portion constituting the valve chamber.

According to the above aspect, the inflow port through which the fluid flowing into the valve chamber passes is formed at the bottom portion constituting the valve chamber. As a result, the fluid flowing in from the inflow port can be caused to flow out from one or two flow path ports not blocked by the outer surface.

### Advantageous Effects of Invention

According to the disclosure, in the flow path switching valve having the valve main body in which at least three flow path ports are formed, each of the three flow path ports can be closed by rotating the valve body.

### BRIEF DESCRIPTION OF DRAWINGS

Fig. 1 is an exploded perspective view illustrating a flow path switching valve according to an embodiment of the disclosure.
Fig. 2A is a perspective view illustrating a valve main body of the flow path switching valve according to an embodiment of the disclosure, Fig. 2B is a cross-sectional perspective view illustrating the valve main body of the flow path switching valve according to the embodiment of the disclosure, and Fig. 2C is a planar cross-sectional view illustrating the valve main body of the flow path switching valve according to the embodiment of the disclosure.
Fig. 3 is a view illustrating a valve body of the flow path switching valve according to the embodiment of the disclosure.
Figs. 4A and 4B are perspective views illustrating a sealing portion of the flow path switching valve according to the embodiment of the disclosure, and Fig. 4C is a cross-sectional view illustrating the sealing portion of the flow path switching valve according to the embodiment of the disclosure.
Figs. 5A and 5B are cross-sectional views illustrating the valve main body, the sealing portion, and the valve body of the flow path switching valve according to the embodiment of the disclosure.
Fig. 6 is a cross-sectional view illustrating the valve main body, the sealing portion, and the valve body of the flow path switching valve according to the embodiment of the disclosure.
Fig. 7A is a cross-sectional view illustrating a cover and a drive unit of the flow path switching valve according to the embodiment of the disclosure, and Fig. 7B is an enlarged cross-sectional view illustrating the cover and the drive unit of the flow path switching valve according to the embodiment of the disclosure.
Fig. 8 is a perspective view illustrating the entire flow path switching valve according to the embodiment of the disclosure.

### DESCRIPTION OF EMBODIMENTS

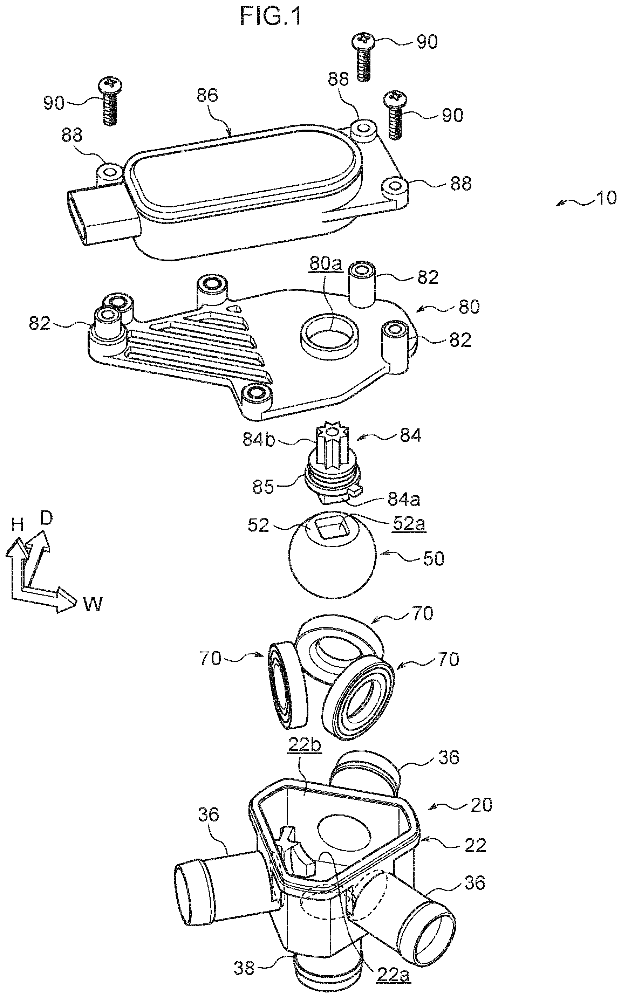

An example of a flow path switching valve according to an embodiment of the disclosure will be described with reference to Figs. 1 to 8. An arrow H in each drawing indicates a component vertical direction, an arrow W indicates a component width direction, and an arrow D indicates a component depth direction. The component vertical direction, the component width direction, and the component depth direction are orthogonal to each other. The component vertical direction, the component width direction, and the component depth direction in the disclosure may be different from a direction of a use state of the flow path switching valve.

In the following description of the drawings, the same reference numerals or similar reference numerals are assigned to the same portions and similar portions. However, a relationship between a thickness and a plane dimension in the drawings, a ratio of thicknesses of each device and each member, and the like are different from the actual ones. Therefore, specific thicknesses and dimensions should be determined in consideration of the following description. The drawings include portions having different dimensional relationships and ratios. Unless otherwise specified in the specification, the number of each component of the disclosure is not limited to one, and a plurality of components may be present.

### <Configuration of Flow Path Switching Valve 10>

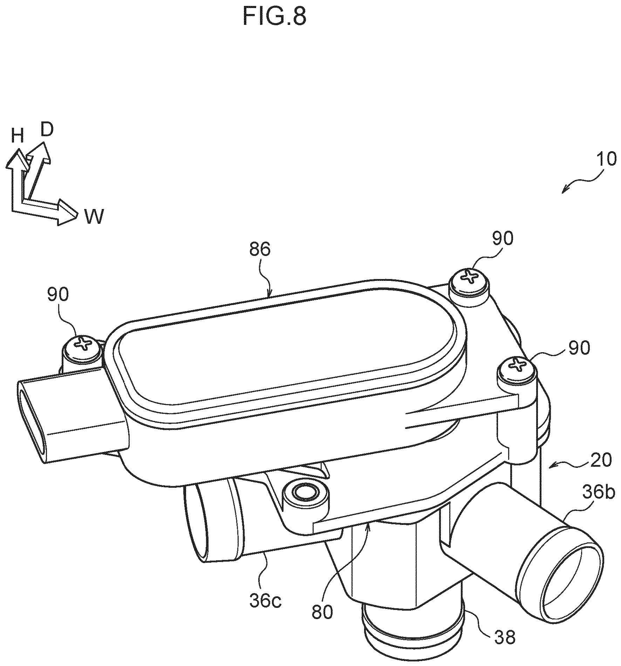

The flow path switching valve 10 illustrated in Fig. 8 is, for example, a rotary four-way valve that switches a flow path of liquid, which is an example of fluid flowing in an engine room of an automobile, in multiple directions.

As illustrated in Fig. 1, the flow path switching valve 10 includes a valve main body 20, a valve body 50, a sealing portion 70, a cover 80, a stem 84, and a drive unit 86. The valve body 50 may be referred to as a valve or a ball valve body.

### (Valve Main Body 20)

The valve main body 20 is integrally formed using a resin material. In the present embodiment, the valve main body 20 is formed using polyphenylene sulfide (PPS) as an example.

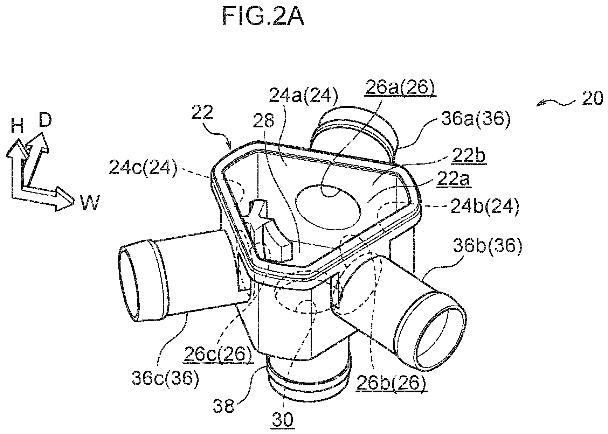

As illustrated in Fig. 2A, the valve main body 20 includes a box-shaped base portion 22 opened upward in the component vertical direction, three outflow pipes 36 protruding outward from the base portion 22, and one inflow pipe 38 protruding downward from the base portion 22.

### [Base Portion 22]

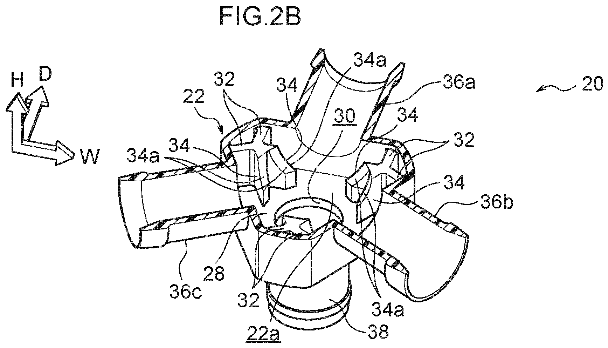

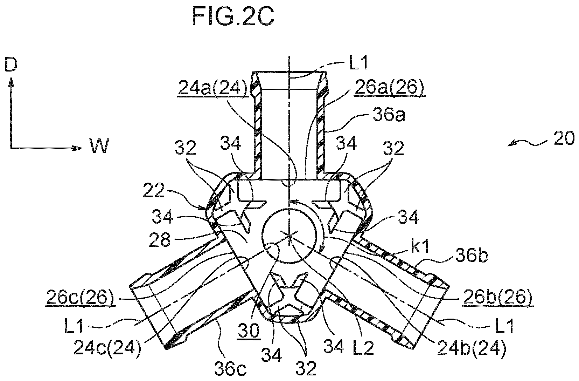

As illustrated in Figs. 2A, 2B, and 2C, the box-shaped base portion 22 has a triangular shape when viewed from above, and has three side walls 24 and a bottom portion 28. In the base portion 22, a valve chamber 22a in which the valve body 50 is disposed and an opening port 22b that opens the valve chamber 22a upward are formed. In this manner, a triangular prism-shaped valve chamber 22a with one end opened is formed inside the base portion 22. The side wall 24 may be referred to as a side plate.

A plate thickness direction of the bottom portion 28 is a component vertical direction, and three side walls 24 are orthogonal to the bottom portion 28.

### -Side Wall 24-

As illustrated in Figs. 2A, 2B, and 2C, three side walls 24 are provided. The three side walls 24 in the present embodiment correspond to three side walls in the disclosure. The plate thickness direction of one side wall 24 of the three side walls 24 is the component depth direction. Hereinafter, for convenience of description, the side wall 24 in which the plate thickness direction faces the component depth direction may be referred to as a side wall 24a, the side wall 24 positioned in the clockwise direction with respect to the side wall 24a in a plan view may be referred to as a side wall 24b, and the remaining side wall 24 may be referred to as a side wall 24c. In the present embodiment, the plan view is an arrow view as viewed from above in the component vertical direction.

In this regard, a circular flow path port 26 through which the liquid flowing out from the valve chamber 22a passes is formed in the side wall 24. Hereinafter, for convenience of description, the flow path port 26 formed in the side wall 24a may be referred to as a flow path port 26a, the flow path port 26 formed in the side wall 24b may be referred to as a flow path port 26b, and the flow path port 26 formed in the side wall 24c may be referred to as a flow path port 26c.

The three flow path ports 26a, 26b, and 26c are disposed in a planar shape. Here, being disposed in a planar shape means that center lines L1 of the three flow path ports 26a, 26b, and 26c are disposed in the same plane.

As indicated by a bidirectional arrow k1 in Fig. 2C, in a plan view, sandwiching angles of the center lines L1 of adj acent flow path ports 26 are all the same, and are set to 120 [degrees]. In the disclosure, the similar angle means substantially the same angle.

### -Bottom Portion 28-

As illustrated in Figs. 2B and 2C, the bottom portion 28 has a triangular shape in a plan view, and a circular inflow port 30 through which liquid flowing into the valve chamber 22a passes is formed at the bottom portion 28. A center line L2 of the circular inflow port 30 extends in the component vertical direction, and overlaps an intersection of the three center lines L1 in a plan view as illustrated in Fig. 2C. Although described in detail later, the valve body 50 (see Fig. 1) rotates about the center line L2 as a rotation center (that is, an axial center). The bottom portion 28 may be referred to as a bottom plate.

A plurality of plate-shaped restricting portions 32 for positioning the sealing portion 70 (see Fig. 1) disposed in the valve chamber 22a is formed in the bottom portion 28.

As illustrated in Fig. 2C, a pair of the restricting portions 32 is formed between the flow path ports 26 in a plan view. Specifically, the restricting portion 32 protrudes from the bottom portion 28 and the side wall 24 to the valve chamber 22a and extends in the component vertical direction. The pair of restricting portions 32 sandwiches the sealing portion 70 to position the sealing portion 70.

As illustrated in Figs. 2B and 2C, a plurality of plate-shaped support portions 34 that support the valve body 50 (see Fig. 1) disposed in the valve chamber 22a from below is formed in the bottom portion 28. The plurality of support portions 34 are provided at apex portions of the triangular bottom portion 28. Specifically, the support portion 34 protrudes from the bottom portion 28 to the valve chamber 22a, and the support portion 34 is formed with a support surface 34a facing upward. The support surface 34a is a curved surface.

### [Outflow Pipe 36]

The outflow pipe 36 has a tubular shape, and as illustrated in Figs. 2A, 2B, and 2C, protrudes outward from the side wall 24 of the base portion 22 and extends in a direction orthogonal to the component vertical direction. Then, the liquid flowing out of the valve chamber 22a through the flow path port 26 passes through the outflow pipe 36.

Hereinafter, for convenience of description, the outflow pipe 36 protruding from the side wall 24a to the outside may be referred to as an outflow pipe 36a, the outflow pipe 36 protruding from the side wall 24b to the outside may be referred to as an outflow pipe 36b, and the outflow pipe 36 protruding from the side wall 24c to the outside may be referred to as an outflow pipe 36c.

### [Inflow Pipe 38]

The inflow pipe 38 has a tubular shape, and as illustrated in Figs. 2A and 2B, protrudes outward from the bottom portion 28 of the base portion 22 and extends downward in the component vertical direction. The fluid flowing through the inflow pipe 38 flows into the valve chamber 22a through the inflow port 30.

In the present embodiment, it is described that the fluid flows into the valve chamber 22a from the inflow pipe 38 (that is, the inflow port 30 of the inlet pipe 38) and flows out from the outflow pipe 36 (that is, outflow pipes 36a, 36b, 36c). However, the flow direction of the fluid is not limited thereto. For example, it is needless to say that the fluid flowing in from any one or more of the outflow pipes 36a, 36b, and 36c may be used to flow out from the other outflow pipes 36 or inflow pipe 38.

### (Valve Body 50)

The valve body 50 is integrally formed using a resin material. In the present embodiment, as an example, the valve body 50 is formed using polyphenylene sulfide (PPS). The valve body 50 may be referred to as a valve or a ball valve body.

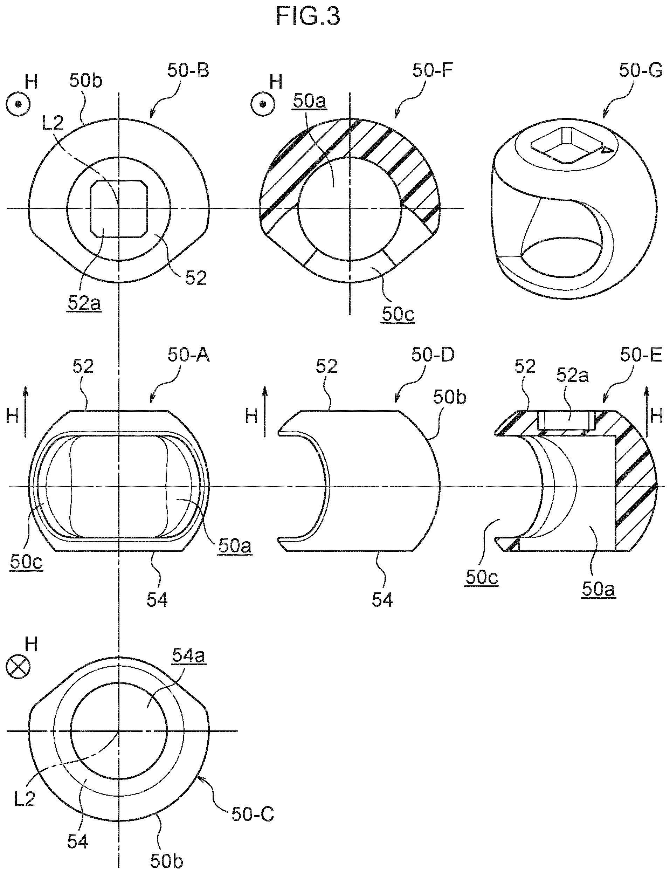

As illustrated in Fig. 3, the valve body 50 has a spherical shape, and a cavity 50a is formed inside. Fig. 3 illustrates the valve body 50 viewed from each direction. Hereinafter, the valve body 50 viewed from the front side orthogonal to the component vertical direction is referred to as a valve body 50-A, the valve body 50 viewed from above in the component vertical direction is referred to as a valve body 50-B, and the valve body 50 viewed from below in the component vertical direction is referred to as a valve body 50-C. The valve body 50 viewed from a side surface side orthogonal to the component vertical direction is referred to as a valve body 50-D, a cross section of the valve body 50 viewed from the side surface side is referred to as a valve body 50-E, and a cross section of the valve body 50 viewed from above is referred to as a valve body 50-F. A perspective view of the valve body 50 is referred to as a valve body 50-G.

As illustrated in the valve body 50-A, the valve body 50-B, and the valve body 50-C, a planar upper surface portion 52 facing upward is formed in an upper portion of the valve body 50, and a planar lower surface portion 54 facing downward is formed in a lower portion of the valve body 50. The lower surface portion 54 is an example of a flat portion. The lower surface portion 54 (that is, the flat portion) is not necessarily required to have a planar shape, and for example, may have any shape as long as the protruding portion is not formed when the valve body 50 is viewed from the side.

The upper surface portion 52 and the lower surface portion 54 are circular, and the lower surface portion 54 is larger than the upper surface portion 52. An outer surface 50b of the valve body 50 sandwiched between the upper surface portion 52 and the lower surface portion 54 is spherical. The support surface 34a (see Fig. 2B) of the support portion 34 described above is a curved surface along the outer surface of the valve body 50. All the spherical portions of the outer surface 50b of the valve body 50 need not have a spherical surface, and a portion sliding on another member may be spherical (that is, the spherical surface).

A recessed portion 52a having a rectangular shape when viewed from above is formed in the upper surface portion 52. In the lower surface portion 54, a circular inflow hole 54a communicating with the cavity 50a and centered on the center line L2 (see Fig. 2C) is formed. Specifically, in the use state of the flow path switching valve 10, the inflow hole 54a has a circular shape centered on the center line L2. The inflow hole 54a faces the inflow port 30 (see Fig. 2B) of the valve main body 20 in the component vertical direction in the use state of the flow path switching valve 10. In other words, the lower surface portion 54 where the inflow hole 54a is formed faces the bottom portion 28 where the inflow port 30 of the valve main body 20 is formed in the component vertical direction in the use state of the flow path switching valve 10.

As illustrated in the valve body 50-A, the valve body 50-D, the valve body 50-E, and the valve body 50-F, a flow hole 50c through which liquid flowing into the cavity 50a or flowing out from the cavity 50a passes is formed in the outer surface 50b of the valve body 50. As illustrated in the valve body 50-F, the flow hole 50c extends in the circumferential direction of the valve body 50 when viewed from above.

In this configuration, the valve body 50 supported by the support portion 34 rotates about the center line L2 in the use state of the flow path switching valve 10. That is, the valve body 50 is rotatably disposed in the valve chamber 22a. When the valve body 50 is rotated to cause the lower surface portion 54 of the valve body 50 and the side wall 24 of the base portion 22 to face each other, a gap into which the sealing portion 70 can be inserted is formed between the lower surface portion 54 and the side wall 24.

### (Sealing Portion 70)

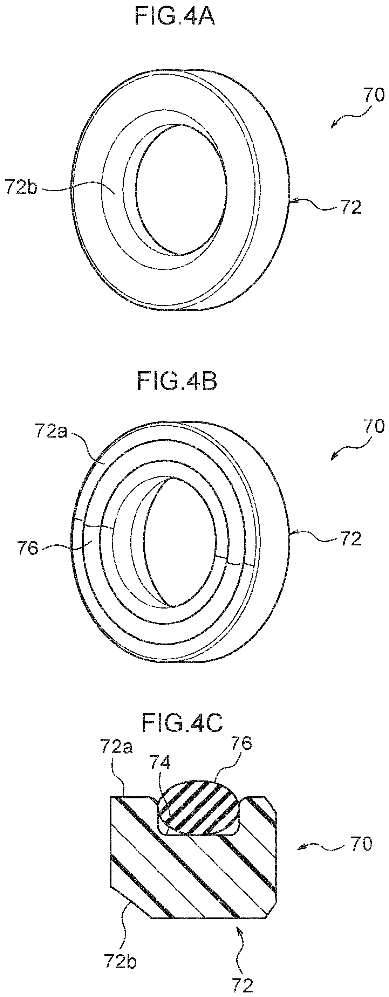

As illustrated in Fig. 1, three sealing portions 70 each having an annular shape are provided. As illustrated in Figs. 4A, 4B, and 4C, the sealing portion 70 includes a seat 72 and an O-ring 76.

### -Seat 72-

The seat 72 is integrally formed using a resin material. In the present embodiment, the seat 72 is formed using polytetrafluoroethylene (PTFE), for example.

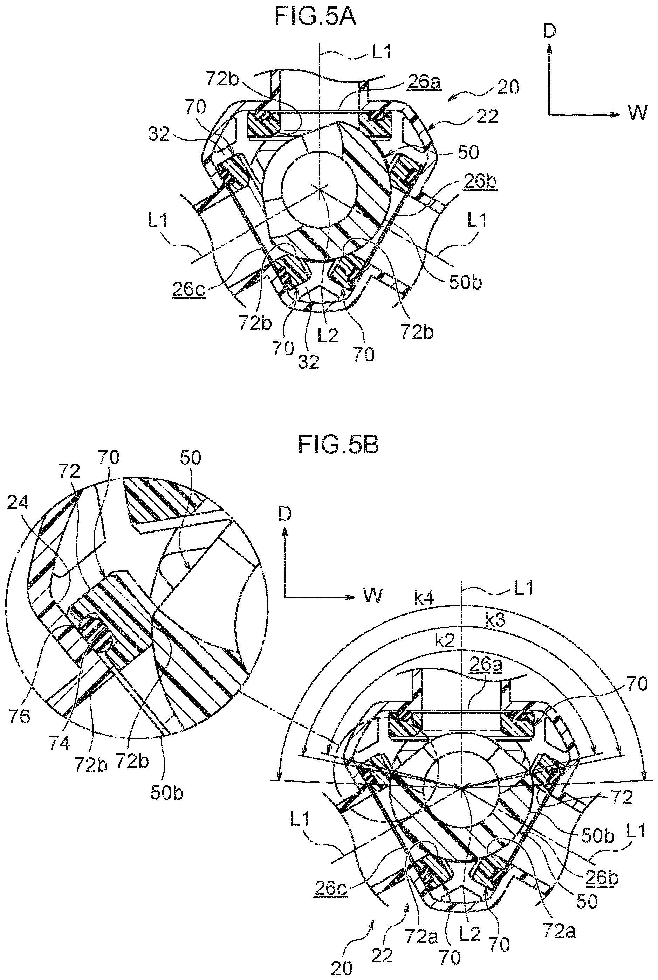

As illustrated in Figs. 4A and 4B, the seat 72 has an annular shape, and surrounds the flow path port 26 in a state of being disposed in the valve chamber 22a (see Figs. 5A and 5B).

As illustrated in Figs. 4C and 5B, the seat 72 is formed with a facing surface 72a facing the side wall 24 of the base portion 22 and a tapered surface 72b inclined with respect to the center line L 1 of the flow path port 26 on a side opposite to the facing surface 72a. An annular recessed portion 74 is formed in the facing surface 72a.

### -O-ring 76-

The O-ring 76 is formed using an elastic member. In the present embodiment, the O-ring 76 is formed using, for example, ethylene propylene diene rubber (EPDM).

As illustrated in Figs. 4B, 4C, and 5B, a part of the O-ring 76 is inserted into the recessed portion 74 of the seat 72. The O-ring 76 comes into contact with the side wall 24 of the valve main body 20 and is elastically deformed in a state in which the seat 72 is disposed in the valve chamber 22a.

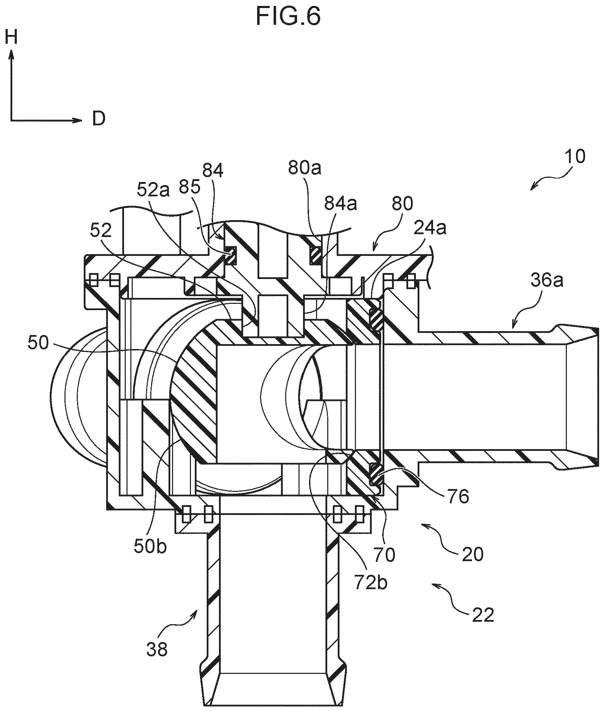

In this configuration, as illustrated in Figs. 5A, 5B, and 6, at least a part of the outer surface 50b of the valve body 50 is in contact with the tapered surfaces 72b of the three seats 72 regardless of the position of the valve body 50 that rotates about the center line L2. When the tapered surface 72b of the seat 72 comes into contact with the outer surface 50b of the valve body 50, the seat 72 is pushed toward the side wall 24 side, and as a result, the O-ring 76 is compressed. As the O-ring 76 is compressed, a contact pressure between the outer surface 50b of the valve body 50 and the tapered surface 72b of the seat 72 increases.

As a result, the flow of liquid between the seat 72 and the side wall 24 is inhibited. The flow of liquid between the tapered surface 72b and the outer surface 50b of the valve body 50 is inhibited. In other words, the sealing portion 70 comes into contact with the outer surface 50b to seal between the outer surface 50b and the side wall 24.

As illustrated in Fig. 5A, the outer surface 50b of the rotating valve body 50 covers the entire flow path port 26b. In other words, the outer surface 50b of the valve body 50 comes into contact with the entire circumference of the tapered surface 72b of the seat 72 in the sealing portion 70 disposed so as to surround the flow path port 26b.

As a result, the liquid flowing into the valve chamber 22a from the inflow port 30 cannot flow out from the flow path port 26b. In other words, the flow path port 26b is closed. In this manner, the outer surface 50b of the rotating valve body 50 is moved to and disposed at a position in contact with the entire circumference of the tapered surface 72b of any one of the sealing portions 70.

As illustrated in Fig. 5B, the outer surface 50b of the rotating valve body 50 covers the entire flow path port 26b and the entire flow path port 26c. In other words, the outer surface 50b of the valve body 50 comes into contact with the entire circumference of the tapered surface 72b of the seat 72 in the sealing portion 70 disposed so as to surround the flow path port 26b and the entire circumference of the tapered surface 72b of the seat 72 in the sealing portion 70 disposed so as to surround the flow path port 26c.

As a result, the liquid flowing into the valve chamber 22a from the inflow port 30 cannot flow out from the flow path port 26b and the flow path port 26c. In other words, the flow path port 26b and the flow path port 26c are closed. In this manner, the outer surface 50b of the rotating valve body 50 is moved to and disposed at a position in contact with the entire circumference of the tapered surface 72b of any two sealing portions 70.

In the present embodiment, as an example, a central angle (that is, central angle k2 illustrated in Fig. 5) from one edge to the other edge of the outer surface 50b of the valve body 50 is 149 [degrees]. A central angle (that is, central angle k3 illustrated in Fig. 5) from a point on one end of one tapered surface 72b of the seat 72 to a point on one end of the other tapered surface 72b is 155 [degrees]. A central angle (that is, central angle k4 illustrated in Fig. 5) from the point at the other end of one tapered surface 72b of seat 72 to the point at the other end of the other tapered surface 72b is 176 [degrees].

### (Cover 80, Stem 84)

The cover 80 is integrally formed using a resin material. In the embodiment, cover 80 is formed by using polyphenylene sulfide (PPS), for example. As illustrated in Fig. 1, the cover 80 has a plate shape with the component vertical direction as a plate thickness direction, and closes the opening port 22b of the valve chamber 22a of the valve main body 20 from above.

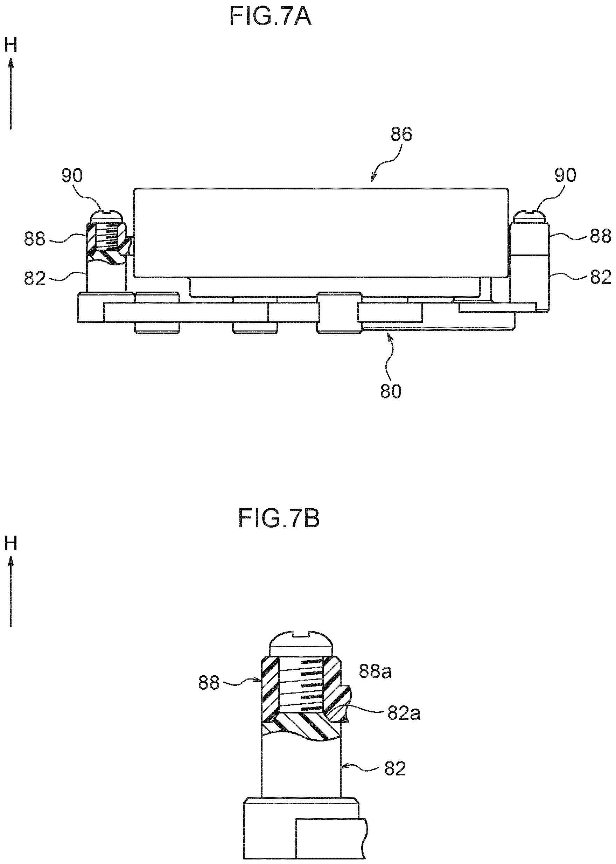

The cover 80 has a through hole 80a through which the stem 84 passes, and three cylindrical portions 82 for attaching the drive unit 86 to the cover 80. A screw portion of a screw 90 used for attaching the drive unit 86 to the cover 80 meshes with an inner peripheral surface of the cylindrical portion 82. As illustrated in Figs. 7A and 7B, the upper surface 82a of the cylindrical portion 82 has a protruding conical shape.

In this configuration, the cover 80 closes the opening port 22b of the valve main body 20 and is fused to the valve main body 20. As a result, the valve chamber 22a is closed.

As illustrated in Fig. 1, the stem 84 extends in the component vertical direction and passes through a through hole 80a formed in the cover 80 (see Fig. 6). In a portion of the stem 84 disposed in the valve chamber 22a, a fitting portion 84a to be fitted into a recessed portion 52a formed in the upper surface portion 52 of the valve body 50 is formed. In this regard, in the stem 84, a gear portion 84b to which the driving force of the motor included in the drive unit 86 is transmitted is formed in a portion opposite to the fitting portion 84a.

An O-ring 85 that seals between the stem 84 and the through hole 80a of the cover 80 is attached to the stem.

### (Drive Unit 86)

The drive unit 86 is provided with a motor inside the drive unit 86. As illustrated in Fig. 1, the drive unit 86 is attached to the cover 80 from above the cover 80. The drive unit 86 is formed with three cylindrical portions 88 for attaching the drive unit 86 to the cover 80. The screw 90 used for attaching the drive unit 86 to the cover 80 is inserted into a circular hole formed in the cylindrical portion 88. As illustrated in Figs. 7A and 7B, a lower surface 88a of the cylindrical portion 88 has a recessed conical shape so that an upper surface 82a of the cylindrical portion 82 is fitted.

In this configuration, the three screws 90 are passed through the cylindrical portion 88, and the screw portions of the screws 90 are respectively tightened into the cylindrical portions 82. Thus, the drive unit 86 is attached to the cover 80. In this state, the gear portion 84b (see Fig. 1) of the stem 84 meshes with the output shaft of the drive unit 86.

### <Operation of Flow Path Switching Valve 10>

Next, the operation of the flow path switching valve 10 will be described. By using the flow path switching valve 10, an outflow destination of the liquid flowing into the valve chamber 22a from the inflow port 30 of the valve main body 20 is switched. Specifically, the drive unit 86 rotates the valve body 50 disposed in the valve chamber 22a about the center line L2 via the stem 84. As a result, the flow path port 26 through which the liquid flowing into the valve chamber 22a from the inflow port 30 flows out is switched.

For example, as illustrated in Fig. 5A, the outer surface 50b of the rotating valve body 50 covers the entire flow path port 26b. In other words, the outer surface 50b of the valve body 50 comes into contact with the entire circumference of the tapered surface 72b of the seat 72 in the sealing portion 70 disposed so as to surround the flow path port 26b. In other words, the outer surface 50b of the valve body 50 comes into contact with the entire circumference of the tapered surface 72b of the sealing portion 70 disposed so as to surround the flow path port 26b.

As a result, the liquid flowing into the valve chamber 22a from the inflow port 30 cannot flow out from the flow path port 26b. In other words, the flow path port 26b is closed.

In this state, the outer surface 50b of the valve body 50 is not in contact with the entire circumference of the tapered surface 72b of the sealing portion 70 disposed so as to surround the flow path port 26a and the entire circumference of the tapered surface 72b of the sealing portion 70 disposed so as to surround the flow path port 26c. Therefore, the liquid flowing into the valve chamber 22a from the inflow port 30 flows out from the flow path port 26a and the flow path port 26c.

The drive unit 86 rotates the valve body 50 disposed in the valve chamber 22a around the center line L2 via the stem 84, so that the outer surface 50b of the valve body 50 covers the entire flow path port 26a. As a result, the outer surface 50b of the valve body 50 comes into contact with the entire circumference of the tapered surface 72b of the sealing portion 70 disposed so as to surround the flow path port 26a. The flow path port 26a is closed by the outer surface 50b.

In this state, the outer surface 50b of the valve body 50 is not in contact with the entire circumference of the tapered surface 72b of the sealing portion 70 disposed so as to surround the flow path port 26b and the entire circumference of the tapered surface 72b of the sealing portion 70 disposed so as to surround the flow path port 26c. Therefore, the liquid flowing into the valve chamber 22a from the inflow port 30 flows out from the flow path port 26b and the flow path port 26c.

The drive unit 86 rotates the valve body 50 disposed in the valve chamber 22a around the center line L2 via the stem 84, and thus, the outer surface 50b of the valve body 50 covers the entire flow path port 26c. As a result, the outer surface 50b of the valve body 50 comes into contact with the entire circumference of the tapered surface 72b of the sealing portion 70 disposed so as to surround the flow path port 26c. The flow path port 26c is closed by the outer surface 50b.

In this state, the outer surface 50b of the valve body 50 is not in contact with the entire circumference of the tapered surface 72b of the sealing portion 70 disposed so as to surround the flow path port 26a and the entire circumference of the tapered surface 72b of the sealing portion 70 disposed so as to surround the flow path port 26b. Therefore, the liquid flowing into the valve chamber 22a from the inflow port 30 flows out from the flow path port 26a and the flow path port 26b.

As described above, the outer surface 50b of the rotating valve body 50 is moved to a position in contact with the entire circumference of the tapered surface 72b of any one of the sealing portions 70.

In this regard, when the drive unit 86 rotates the valve body 50 disposed in the valve chamber 22a around the center line L2 via the stem 84, the outer surface 50b of the valve body 50 covers the entire flow path port 26b and the entire flow path port 26c as illustrated in Fig. 5B. In other words, the outer surface 50b of the valve body 50 comes into contact with the entire circumference of the tapered surface 72b of the seat 72 in the sealing portion 70 disposed so as to surround the flow path port 26b and the entire circumference of the tapered surface 72b of the seat 72 in the sealing portion 70 disposed so as to surround the flow path port 26c.

As a result, the liquid flowing into the valve chamber 22a from the inflow port 30 cannot flow out from the flow path port 26b and the flow path port 26c. In other words, the flow path port 26b and the flow path port 26c are closed.

In this state, the outer surface 50b of the valve body 50 is not in contact with the sealing portion 70 disposed so as to surround the flow path port 26a. Therefore, the liquid flowing into the valve chamber 22a from the inflow port 30 flows out from the flow path port 26a.

The drive unit 86 rotates the valve body 50 disposed in the valve chamber 22a around the center line L2 via the stem 84, and thus, the outer surface 50b of the valve body 50 covers the entire flow path port 26a and the entire flow path port 26c. As a result, the outer surface 50b of the valve body 50 comes into contact with the entire circumference of the tapered surface 72b of the sealing portion 70 disposed so as to surround the flow path port 26a and the entire circumference of the tapered surface 72b of the sealing portion 70 disposed so as to surround the flow path port 26c. The flow path port 26a and the flow path port 26c are closed by the outer surface 50b.

In this state, the outer surface 50b of the valve body 50 is not in contact with the sealing portion 70 disposed so as to surround the flow path port 26b. Therefore, the liquid flowing into the valve chamber 22a from the inflow port 30 flows out from the flow path port 26b.

The drive unit 86 rotates the valve body 50 disposed in the valve chamber 22a around the center line L2 via the stem 84, and thus, the outer surface 50b of the valve body 50 covers the entire flow path port 26a and the entire flow path port 26b. As a result, the outer surface 50b of the valve body 50 comes into contact with the entire circumference of the tapered surface 72b of the sealing portion 70 disposed so as to surround the flow path port 26a and the entire circumference of the tapered surface 72b of the sealing portion 70 disposed so as to surround the flow path port 26b. The flow path port 26a and the flow path port 26b are closed by the outer surface 50b.

In this state, the outer surface 50b of the valve body 50 is not in contact with the sealing portion 70 disposed so as to surround the flow path port 26c. Therefore, the liquid flowing into the valve chamber 22a from the inflow port 30 flows out from the flow path port 26c.

As described above, the outer surface 50b of the rotating valve body 50 is disposed to move to a position in contact with the entire circumference of the tapered surface 72b of any two sealing portions 70.

### <Summary>

In the flow path switching valve 10 described above, three flow path ports 26 are formed in each of the side walls 24 of the valve main body 20. The sealing portion 70 disposed so as to surround the flow path port 26 seals between the outer surface 50b of the valve body 50 and the side wall 24.

The outer surface 50b of the rotating valve body 50 is in contact with the entire circumference of the tapered surface 72b of at least one sealing portion 70. In other words, the outer surface 50b of the rotating valve body 50 closes at least one flow path port 26. As described above, in the flow path switching valve 10 having the valve main body 20 in which the three flow path ports 26 are formed, each of the flow path ports 26 can be closed by rotating the valve body 50.

In the flow path switching valve 10, the valve body 50 rotates to a position (that is, the angular position) where the outer surface 50b is in contact with the entire circumference of the tapered surface 72b of any one of the sealing portions 70 and a position where the outer surface is in contact with the entire circumference of the tapered surface 72b of any two of the sealing portions 70. In other words, the valve body 50 rotates to a position where the outer surface 50b closes any one of the flow path ports 26 and a position where the outer surface closes any two of the flow path ports 26. By rotating the valve body 50 in this manner, any one of the flow path ports 26 or any two of the flow path ports 26 can be closed.

In the flow path switching valve 10, even in a case in which the rotating valve body 50 is disposed at any position, at least a part of the outer surface 50b of the valve body 50 is in contact with each tapered surface 72b of the three seats 72. When the outer surface 50b of the valve body 50 presses the seat 72 toward the side wall 24 side, the O-ring 76 is elastically deformed.

As the O-ring 76 is elastically deformed in this manner, the contact pressure between the outer surface 50b of the valve body 50 and the tapered surface 72b of the seat 72 is increased. That is, the valve body 50 is pushed by the seat 72 from three directions. As a result, the posture of the rotating valve body 50 is always stable.

In the flow path switching valve 10, the sandwiching angles of the center lines of adjacent flow path ports 26 are all the same. As a result, the flow path switching valve 10 can be configured more easily than a case where the sandwiching angles are different.

In the flow path switching valve 10, the inflow port 30 through which liquid flowing into the valve chamber 22a passes is formed at the bottom portion 28 constituting the valve chamber 22a. As a result, the liquid flowing in from the inflow port 30 can be caused to flow out from one or two flow path ports 26 that are not closed by the outer surface 50b.

The flow path switching valve 10 is not provided with a sealing portion surrounding the inflow port 30. Therefore, the number of sealing portions can be reduced as compared with the case where the sealing portion surrounding the inflow port is provided.

Although the disclosure has been described in detail with respect to specific embodiments, the disclosure is not limited to such embodiments, and it is apparent to those skilled in the art that the disclosure can adopt various other embodiments within the scope of the disclosure. For example, although not specifically described in the above embodiment, the flow path switching valve 10 includes the inflow pipe 38 and the inflow port 30, but the disclosure need not include the inflow pipe and the inflow port. In this case, liquid flows in from one flow path port 26, and liquid flows out from the other flow path port 26.

In the above embodiment, the valve body 50 rotates to a position where the outer surface 50b is in contact with the entire circumference of the tapered surface 72b of any one of the sealing portions 70 and a position where the outer surface is in contact with the entire circumference of the tapered surface 72b of any two of the sealing portions 70. However, in the disclosure, the valve need not rotate to a position where the outer surface is in contact with the entire circumference of the tapered surfaces 72b of any two sealing portions. In this case, the effect exerted by the outer surface coming into contact with the entire circumference of the tapered surfaces 72b of any two sealing portions does not occur.

In the above embodiment, the description has been made using the liquid as the fluid, but in the disclosure, the fluid may be a gas.

The disclosure of Japanese Patent Application No. 2022-007407 filed on January 20, 2022 is incorporated herein by reference in its entirety.

All documents, patent applications, and technical standards described in this specification are incorporated herein by reference to the same extent as if each document, patent application, and technical standard were specifically and individually described to be incorporated by reference.

## Claims

1. A flow path switching valve comprising:
a valve main body, a valve chamber being formed inside the valve main body, and a flow path port through which a fluid passes being formed in each of three side walls constituting the valve chamber;
a valve body that is rotatably disposed in the valve chamber, that has a cavity formed inside the valve body, that has a spherical outer surface, and that has a flow hole through which a fluid flowing into the cavity or flowing out from the cavity passes and which is formed in the outer surface; and
three sealing portions that each have an annular shape, that are each disposed so as to surround the flow path port, and that each come into contact with the outer surface to seal between the outer surface and a side wall,
wherein the outer surface of the rotating valve body is in contact with an entire circumference of at least one of the sealing portions.

2. The flow path switching valve according to claim 1, wherein the valve body rotates to an angular position at which the outer surface is in contact with an entire circumference of any one of the sealing portions and an angular position at which the outer surface is in contact with an entire circumference of any two of the sealing portions.

3. The flow path switching valve according to claim 1 or 2, wherein:
the sealing portion includes an annular seat and an O-ring in contact with the seat and the side wall,
an annular tapered surface that is in contact with the outer surface of the valve body is formed on the seat, and
at least a part of the outer surface of the valve body comes into contact with each tapered surface of three seats and the outer surface presses the seat toward the side wall side to elastically deform the O-ring, even in a case in which the rotating valve body is disposed at any angular position.

4. The flow path switching valve according to any one of claims 1 to 3, wherein:
the flow path port has a circular shape, and
sandwiching angles of center lines of adjacent flow path ports are all the same.

5. The flow path switching valve according to any one of claims 1 to 4, wherein an inflow port through which a fluid flowing into the valve chamber passes is formed at a bottom portion constituting the valve chamber.
